# FASCICULE DE BREVET EUROPEEN

(11) **EP 3 273 318 B1**
(45) Date de publication et mention de la délivrance du brevet: **14.07.2021**
(21) Numéro de dépôt: 17182150.7
(22) Date de dépôt: 19.07.2017
(51) Int. Cl.: G05D 1/12

(54) **SYSTÈME AUTONOME DE PRISE DE VUES ANIMÉES PAR UN DRONE AVEC POURSUITE DE CIBLE ET LOCALISATION AMÉLIORÉE DE LA CIBLE**
AUTONOMES AUFNAHMESYSTEM VON ANIMIERTEN BILDERN DURCH EINE DROHNE MIT ZIELVERFOLGUNG UND VERBESSERTER LOKALISIERUNG DES ZIELS
AUTONOMOUS SYSTEM FOR COLLECTING MOVING IMAGES BY A DRONE WITH TARGET TRACKING AND IMPROVED TARGET POSITIONING

(30) Priorité: 22.07.2016 FR 1657006
(43) Date de publication de la demande: 24.01.2018
(73) Titulaire: Parrot Drones, 75010 Paris (FR)
(72) Inventeur: CHEVALLEY, Laure, 75014 PARIS (FR); LEURENT, Edouard, 75005 Paris (FR)
(74) Mandataire: Dupuis-Latour, Dominique

(56) Documents cités:
- EP-A1- 2 933 775
- EP-A2- 2 071 353
- US-A1- 2016 031 559
- GROSSMAN W ED - INSTITUTE OF ELECTRICAL AND ELECTRONICS ENGINEERS: "Bearings-only tracking: a hybrid coordinate system approach", PROCEEDINGS OF THE CONFERENCE ON DECISION AND CONTROL. BRIGHTON, DEC. 11 - 13, 1991; [PROCEEDINGS OF THE CONFERENCE ON DECISION AND CONTROL], NEW YORK, IEEE, US, vol. CONF. 30, 11 décembre 1991 (1991-12-11), pages 2032-2037, XP010722796, DOI: 10.1109/CDC.1991.261776 ISBN: 978-0-7803-0450-5
- ABABSA F: "Advanced 3D localization by fusing measurements from GPS, inertial and vision sensors", SYSTEMS, MAN AND CYBERNETICS, 2009. SMC 2009. IEEE INTERNATIONAL CONFERENCE ON, IEEE, PISCATAWAY, NJ, USA, 11 octobre 2009 (2009-10-11), pages 871-875, XP031575396, ISBN: 978-1-4244-2793-2
- SONG HA-RYONG ET AL: "Target localization using RGB-D camera and LiDAR sensor fusion for relative navigation", 2014 CACS INTERNATIONAL AUTOMATIC CONTROL CONFERENCE (CACS 2014), IEEE, 26 novembre 2014 (2014-11-26), pages 144-149, XP032771320, DOI: 10.1109/CACS.2014.7097178 [extrait le 2015-04-28]

## Description

L'invention concerne les appareils motorisés volants pilotés à distance, ci-après désignés généralement sous la dénomination de "drones".

L'invention s'applique tout particulièrement aux drones à voilure tournante tels que les quadricoptères, dont un exemple typique est le *Bebop* de Parrot SA, Paris, France, qui est un drone équipé d'une série de capteurs (accéléromètres, gyromètres trois axes, altimètre), d'une caméra frontale captant une image de la scène vers laquelle est dirigé le drone, et d'une caméra de visée verticale captant une image du terrain survolé.

Mais l'invention peut s'appliquer aussi bien à d'autres types de drones, par exemple les drones à voilure fixe, notamment de type "aile volante" tel que par exemple le modèle *eBee* de SenseFly, Cheseaux-Lausanne, Suisse, qui est un drone de cartographie professionnelle de terrain, ou encore le modèle *Disco* récemment présenté par Parrot SA, Paris, France.

Les drones à voilure tournante sont pourvus de rotors multiples entrainés par des moteurs respectifs commandables de manière différenciée afin de piloter le drone en attitude et en vitesse.

Les documents WO 2010/061099 A2 et EP 2 364 757 A1 (Parrot SA) décrivent un tel drone ainsi que son principe de pilotage par l'intermédiaire d'un terminal tel qu'un téléphone ou baladeur multimedia à écran tactile et accéléromètre intégré, par exemple un téléphone cellulaire de type *iPhone* ou une tablette multimedia de type *iPad* (marques déposées). Ces appareils incorporent les divers organes de contrôle nécessaires à la détection des commandes de pilotage et à l'échange bidirectionnel de données avec le drone via une liaison sans fil de type réseau local Wi-Fi (IEEE 802.11) ou Bluetooth. Ils sont en outre pourvus d'un écran tactile affichant l'image captée par la caméra frontale du drone, avec en superposition un certain nombre de symboles permettant l'activation de commandes par simple contact du doigt de l'utilisateur sur cet écran tactile.

La caméra video frontale du drone peut être utilisée pour capter des séquences d'images d'une scène vers laquelle est tourné le drone. L'utilisateur peut ainsi se servir du drone de la même façon que d'une caméra ou d'un caméscope qui, au lieu d'être tenu à la main, serait porté par le drone. Les images recueillies peuvent être enregistrées puis diffusées, mises en ligne sur des sites web d'hébergement de séquences video, envoyées à d'autres internautes, partagées sur des réseaux sociaux, etc.

La caméra frontale est avantageusement une caméra orientable, afin d'orienter de façon contrôlée dans une direction prédéterminée l'axe de visée, et donc le champ des images transmises avec le flux video. Une technique mise en œuvre notamment dans l'appareil *Bebop* précité et décrite dans le EP 2 933 775 A1, consiste à utiliser une caméra grand-angle haute définition munie d'un objectif à champ hémisphérique de type *fisheye* couvrant un champ d'environ 180° et à fenêtrer en temps réel l'image brute délivrée par ce capteur, par un traitement logiciel assurant la sélection des pixels utiles de l'image brute dans une zone de capture déterminée en fonction d'un certain nombre de paramètres, dont des commandes de pointage dans la direction d'une cible particulière choisie par l'utilisateur ou suivie automatiquement par le drone. En variante, ou même en complément, du contrôle de l'axe de visée de la caméra par un logiciel de fenêtrage, il est également possible de monter la caméra sur un support articulé trois-axes de type *gimbal* avec suspension à la Cardan, muni de servomoteurs pilotés en fonction des données gyrométriques et des commandes de pointage. L'invention s'applique bien évidemment à tout type de caméra, orientable ou non, et quel que soit son mode de pointage.

Dans un mode dit de poursuite (*tracking*), le drone peut être programmé pour suivre une cible mobile dont les coordonnées sont connues et pour que pendant son vol, l'axe de visée de la caméra soit dirigé vers ladite cible. Cette cible est typiquement le terminal lui-même, porté par un utilisateur qui peut être en mouvement (par exemple en train de pratiquer un sport où il se déplace - course, glisse, conduite, etc.). Dans ce mode, le drone est capable de filmer les évolutions de l'utilisateur sans que celui-ci n'ait à agir sur les déplacements du drone et sur l'axe de visée de la caméra.

À cet effet, les coordonnées du terminal, obtenues par une centrale GPS équipant celui-ci de façon en soi connue, sont communiquées au drone par la liaison sans fil, et le drone peut donc ajuster ses déplacements de manière à suivre le terminal et à ce que l'axe de visée de la caméra reste dirigé vers le terminal, de sorte que l'image reste ainsi cadrée sur le sujet.

Toutefois, l'obtention d'un bon cadrage à l'aide des seules coordonnées GPS de la cible reste problématique. En effet, les unités GPS embarquées dans les terminaux de type *smartphone* sont des unités grand public peu coûteuses, souffrant d'un manque de précision par rapport aux possibilités théoriques du système satellitaire GPS. De fait, l'erreur sur les coordonnées délivrées peut atteindre 5 à 10 mètres par rapport à la position exacte.

Ainsi dans certains cas, l'utilisateur est mal cadré, ou même tout simplement hors champ.

Par ailleurs, la cadence à laquelle ces coordonnées GPS sont délivrées par l'unité GPS est en général assez lente (1 jeu de coordonnées par seconde), ce qui rend difficile un suivi des déplacements de la cible, en particulier lorsque l'utilisateur est en accélération rapide sur des trajectoires non régulières.

Pour tenter de s'affranchir des imprécisions liées aux unités GPS équipant ce type d'appareils, le EP 2 071 353 A2 propose de combiner les données délivrées par l'unité GPS de la cible poursuivie avec des données issues d'une analyse de l'image video de cette cible, prise par le drone poursuivant. L'axe de visée de la caméra est recalé à partir de ces données combinées, par modification de l'orientation du drone poursuivant et/ou de la caméra video embarquée. Un modèle prédictif, corrigé en permanence par les informations d'état effectif recueillies, permet d'améliorer la précision du recalage.

Un but de l'invention est de proposer un tel système permettant à un drone, en mode de prise de vues autonome d'une cible en déplacement, d'améliorer encore plus le recalage de la caméra de poursuite de cette cible, et de tirer parti d'une position relative mieux définie du drone et de la cible en s'affranchissant partiellement des imprécisions liées aux unités GPS équipant ce type d'appareils.

L'invention propose à cet effet un système du type divulgué par le EP 2 071 353 A2 précité, c'est-à-dire un système de prise de vues animées, comprenant un drone pourvu d'une caméra et une station au sol communiquant par une liaison sans fil avec le drone, les déplacements du drone étant définis par des instructions de vol appliquées à un groupe propulseur ou à un ensemble de groupes propulseurs du drone, le drone étant apte à se déplacer de façon autonome pour réaliser une prise de vues animée d'une cible se déplaçant avec la station au sol.

Plus précisément, ce système comprend des moyens pour ajuster l'angle de visée de la caméra au cours des déplacements du drone et de la cible pour que les images prises par la caméra soient cadrées sur la cible, et des moyens pour engendrer lesdites instructions de vol pour commander le déplacement du drone en direction de la cible et de sorte que la distance et la position angulaire entre le drone et la cible répondent à des règles déterminées.

Les moyens pour ajuster l'angle de visée et pour engendrer lesdites instructions de vol sont basés : i) sur une détermination de la position géographique GPS de la cible par rapport à la position géographique GPS du drone, et de la position angulaire de la cible par rapport à un axe principal lié au drone, et ii) sur l'analyse d'un signal produit par analyse des images successivement délivrées par la caméra du drone et/ou produit par la cible et reçu par le drone.

De façon caractéristique de l'invention, le système comporte également un moteur logiciel de fusion apte à fusionner, pour obtenir des informations de position géographique affinée de la cible :
i) des informations de position géographique de la cible, comprenant également une valeur associée d'incertitude de ladite position géographique, et
ii) des informations de position angulaire de la cible par rapport à un axe principal lié au drone, comprenant également une valeur associée d'incertitude de ladite position angulaire.

Plus précisément, le moteur logiciel de fusion comprend un filtre de Kalman étendu à coordonnées hybrides comprenant :
- une unité de prédiction sensible à un modèle de prédiction du mouvement de la cible et opérant à partir : i) d'estimées recalées de la position et de la vitesse de la cible obtenues à partir desdites informations de position géographique de la cible et ii) d'estimées recalées de la position et de la vitesse de la cible obtenues à partir desdites informations de position angulaire, ainsi que iii) des incertitudes respectives desdites estimées ;
- une première unité de recalage recevant en entrée la position géographique et la vitesse de la cible et des estimées de position et de vitesse de la cible issues de l'unité de prédiction, ainsi que leurs incertitudes respectives, et délivrant en sortie des valeurs recalées de position et de vitesse de la cible ainsi que leurs incertitudes respectives ; et
- une seconde unité de recalage recevant en entrée la position angulaire et la vitesse de la cible et des estimées de position angulaire et de vitesse de la cible issues de l'unité de prédiction, ainsi que leurs incertitudes respectives, et délivrant en sortie des valeurs recalées de position angulaire et de vitesse de la cible ainsi que leurs incertitudes respectives.

Le modèle de prédiction est de préférence un modèle à vitesse de cible constante.

Très avantageusement, le moteur logiciel de fusion comprend en outre une unité de conversion apte à convertir les informations de position et de vitesse de la cible, générées en coordonnées cartésiennes, en informations correspondantes converties en coordonnées angulaires, et *vice versa*, et en ce que ladite seconde unité de recalage opère en coordonnées angulaires.

Le moteur logiciel de fusion est notamment apte à prendre en compte au moins une information supplémentaire parmi : une information d'altitude mesurée de la cible ; une information de l'accélération mesurée de la cible ; une information de distance mesurée entre le drone et la cible ; et une information supplémentaire d'échelle ou de changement d'échelle dans les images prises par la caméra.

De préférence, la cadence d'analyse du signal produit par analyse des images successivement délivrées par la caméra du drone, et/ou produit par la cible et reçu par le drone, est plus rapide que la cadence à laquelle les positions géographiques GPS sont déterminées.

De préférence également, le signal produit par analyse des images successivement délivrées par la caméra du drone, et/ou produit par la cible et reçu par le drone, est un signal visuel de position de la cible dans les images générées par la caméra du drone, et le système comporte des moyens pour localiser et suivre dans les images successives la localisation dudit signal.

La caméra peut être dans ce cas une caméra fixe à champ large de type *fish-eye*, les moyens d'ajustement de l'angle de visée de la caméra étant alors aptes à recadrer et retraiter les images à champ large prises par la caméra, ou bien une caméra montée sur un support articulé trois-axes de type *gimbal* avec suspension à la Cardan munie de servomoteurs pilotés par lesdits moyens d'ajustement de l'angle de visée de la caméra.
Dans une variante particulière de mise en œuvre, le signal produit par analyse des images successivement délivrées par la caméra du drone et/ou produit par la cible et reçu par le drone est un signal de type lidar réfléchi par la cible à partir d'une émission par le drone.

On va maintenant décrire un exemple de mise en œuvre de la présente invention, en référence aux dessins annexés où les mêmes références désignent d'une figure à l'autre des éléments identiques ou fonctionnellement semblables.
La Figure 1 est une vue d'ensemble schématique d'un système de prise de vues comprenant un drone et une station au sol.
La figure 2 est un schéma illustrant la difficulté à cadrer une cible à partir d'un drone lorsque les coordonnées de la cible par rapport au drone sont définies de façon très imprécise,
La Figure 3 est un schéma illustrant la façon dont les coordonnées de la cible par rapport au drone peuvent être définies avec une précision améliorée.
La Figure 4 est un schéma par blocs d'un moteur de fusion entre deux jeux d'informations utiles pour générer ces coordonnées de précision améliorée.

On va maintenant décrire un exemple de mise en œuvre de l'invention. Elle s'applique à un drone, par exemple un drone de type quadricoptère, tel que le Parrot *Bebop Drone*, dont les divers aspects techniques sont décrits dans les EP 2 364 757 A1, EP 2 613 213 A1, EP 2 450 862 A1 ou encore EP 2 613 214 A1 précités.

Le drone D comporte des rotors coplanaires dont les moteurs sont pilotés indépendamment par un système intégré de navigation et de contrôle d'attitude. Il est pourvu d'une caméra C à visée frontale permettant d'obtenir une image de la scène vers laquelle est orienté le drone.

Le drone peut comporter également de préférence une seconde caméra à visée verticale (non représentée) pointant vers le bas, apte à capter des images successives du terrain survolé et utilisée notamment pour évaluer la vitesse du drone par rapport au sol.

Des capteurs inertiels (accéléromètres et gyromètres) permettent de mesurer avec une certaine précision les vitesses angulaires et les angles d'attitude du drone, c'est-à-dire les angles d'Euler (tangage, roulis et lacet) décrivant l'inclinaison du drone par rapport à un plan horizontal d'un repère terrestre fixe, étant entendu que les deux composantes longitudinale et transversale de la vitesse horizontale sont intimement liées à l'inclinaison suivant les deux axes respectifs de tangage et de roulis. Un télémètre à ultrasons disposé sous le drone fournit par ailleurs une mesure de l'altitude par rapport au sol. Le drone est également pourvu de moyens de localisation permettant de déterminer sa position absolue dans l'espace, notamment à partir de données issues d'un récepteur GPS.

La caméra C est de préférence une caméra fixe de type *fish-eye* à champ hémisphérique, comme décrit par exemple dans le EP 2 933 775 A1 (Parrot). Avec une telle caméra, les changements de l'axe de visée de la caméra sont réalisés non pas par déplacement physique de la caméra, mais par recadrage et retraitement des images prises par la caméra en fonction d'un angle de visée virtuel, déterminé par rapport à l'axe principal du drone, donné en consigne.

L'"axe principal" du drone, qui est un axe à considérer dans un repère lié au drone, est typiquement l'axe longitudinal du drone (axe dit "de roulis" ou "de cap"). L'axe de visée de la caméra peut être confondu avec cet axe principal, ou former avec lui un angle constant, par exemple incliné vers le bas, comme décrit dans le EP 2 933 775 A1 précité.

Le drone D est piloté par une station au sol T, typiquement sous la forme d'une télécommande, par exemple de type télécommande d'aéromodélisme, d'un téléphone intelligent ou d'une tablette intelligente. Le téléphone intelligent ou la tablette intelligente sont pourvus d'un écran tactile E affichant l'image embarquée par la caméra frontale C, avec en superposition un certain nombre de symboles permettant l'activation de commandes de pilotage par simple contact du doigt d'un utilisateur sur l'écran tactile E. Lorsque le drone D est piloté par une station T de type télécommande, l'utilisateur peut être pourvu de lunettes de pilotage en immersion, souvent dénommées lunettes FPV (*First Person View*). L'appareil T est également pourvu de moyens de liaison radio avec le drone D, par exemple de type réseau local Wi-Fi (IEEE 802.11), pour l'échange bidirectionnel de données du drone D vers l'appareil T, notamment pour la transmission de l'image captée par la caméra C et de données de vol, et de l'appareil T vers le drone D pour l'envoi de commandes de pilotage. Le système constitué par le drone D et l'appareil T est configuré pour pouvoir donner au drone la faculté de suivre et de filmer de manière autonome une cible, typiquement la cible constituée par l'appareil T lui-même porté par l'utilisateur.

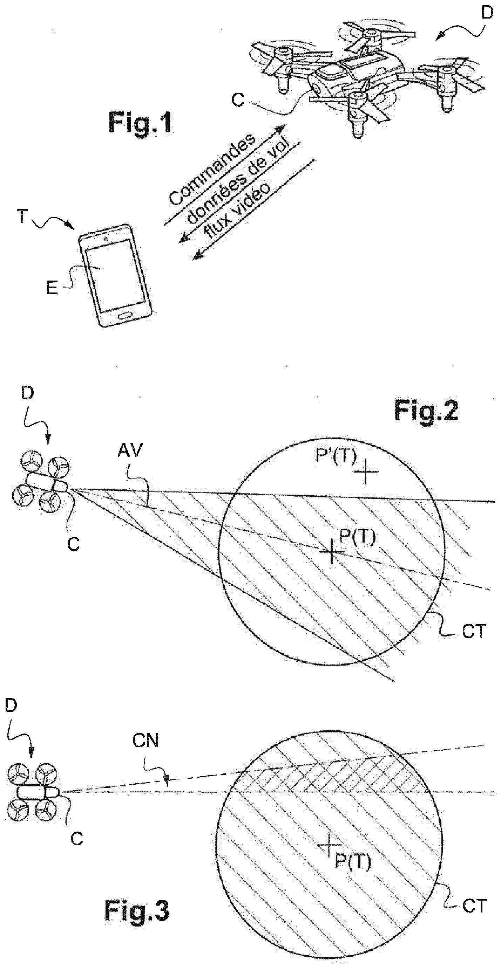

En référence à la Figure 2, on a représenté schématiquement le drone D en mouvement autonome, équipé de la caméra C censée réaliser une séquence d'images animées de la cible, dont la position est donnée fondamentalement par les coordonnées GPS du terminal T. Ces coordonnées sont délivrées par l'unité GPS du terminal à faible cadence (en général autour de 1 Hz) et transmises au drone pour que celui-ci ajuste l'axe de visée de la caméra C sur le terminal T et donc sur l'utilisateur. Les données ainsi produites seront par la suite qualifiées de données de "position géographique", dans la mesure où elles indiquent la position du drone dans un repère galiléen absolu, géocentré.

Selon l'état de l'art, l'axe de visée de la caméra C est déterminé sur la base des coordonnées du vecteur reliant le drone, dont la position P(D) est indiquée par l'unité GPS embarquée dans le drone,

Le cercle CT sur la Figure 2 représente la sphère des incertitudes cumulées maximales des unités GPS du drone D et du terminal T, tandis que la zone hachurée représente le champ des images prises par la caméra C, centré sur son axe de visée AV. On comprend que, si des erreurs dans les coordonnées GPS du drone et de la cible, indiquées par leurs unités GPS respectives, font que la position de la cible par rapport au drone est P'(T) alors que la position évaluée par le GPS est P(T), le sujet portant la cible peut se trouver très excentré dans l'image, et dans certains cas se trouver hors champ, comme illustré sur la Figure 2.

Les moyens pour déterminer l'axe de visée de la caméra C sont complétés par la prise en compte d'un signal généré à partir de la cible elle-même, capable d'indiquer une position angulaire de la cible, avec une incertitude donnée, par rapport à l'axe principal du drone. Ce signal sera par la suite qualifié de "non-géographique" dans la mesure où, par opposition au signal de "position géographique" du drone (données GPS), il ne donne aucune indication de la position absolue de ce dernier dans un repère géocentré mais seulement une indication de la position relative qu'occupe la cible par rapport au drone.

Dans une première forme de réalisation, le signal non-géographique est un signal lidar réfléchi par l'utilisateur à partir d'un signal laser incident émis par une source spécifique embarquée dans le drone, selon une technologie de détection angulaire connue en soi. À partir du signal réfléchi, le drone est capable de recueillir, à une cadence plus rapide que celle des coordonnées GPS et de façon plus précise, des informations représentatives de l'orientation du vecteur (tridimensionnel) allant de la source laser à l'utilisateur.

Dans une deuxième forme de réalisation, le signal non-géographique est un signal déduit de la présence visuelle de la cible dans l'image brute à large champ prise par la caméra. À cet effet, un programme d'analyse d'image prévu dans l'unité centrale embarquée du drone, ou dans un circuit dédié, est configuré pour suivre le déplacement de l'utilisateur dans la séquence d'images générée par la caméra et pour en déduire dans quelle direction angulaire se trouve l'utilisateur par rapport à l'axe principal du drone, en général confondu avec l'axe optique de la caméra *fish-eye.* Plus précisément, ce programme est configuré pour localiser et suivre dans les images successives un motif visuel ou une tache de couleur représentative de l'aspect visuel de la cible par rapport à un fond (par exemple un motif élaboré par analyse des niveaux de gris de l'image). Par exemple, pour la prise de vues d'un utilisateur pratiquant un sport de neige, le fond sera en général blanc et la couleur de la tache dans les images sera celle des vêtements de l'utilisateur. Cette approche permet par ailleurs de disposer de données angulaires de position de l'utilisateur à suivre à une cadence sensiblement plus rapide que celle avec laquelle les coordonnées GPS sont délivrées, à savoir la cadence des images qui est typiquement de 30 images par seconde pour ce type d'application.

La Figure 3 illustre l'amélioration de la position de la cible vue du drone grâce à la connaissance de l'information angulaire recueillie avec une incertitude connue, que ce soit grâce à un système lidar ou autre système physique dédié, ou par l'analyse de la position angulaire de la cible dans l'image prise par la caméra C. L'électronique embarquée du drone est capable de savoir par recoupement entre les données GPS et ces données de détection angulaire que la cible se trouve à l'intersection de la sphère d'incertitude CT inhérente à la mesure GPS et du cône d'incertitude CN inhérent à la détermination de position angulaire précitée.

L'invention concerne plus précisément la façon dont les données de position obtenues par les unités GPS du drone D et du terminal T d'une part, et par la détermination de la position angulaire de la cible par rapport à l'axe du drone d'autre part, sont fusionnées pour aboutir à cette amélioration de la détermination de la position et de la vitesse de la cible.

Cette opération met en œuvre un "moteur" de fusion au sens informatique de ce terme, c'est-à-dire un composant logiciel qui effectue une tâche de manière automatique, sans intervention humaine.

Le moteur de fusion est mis en œuvre par traitement numérique de préférence dans le drone D lui-même, ou le cas échéant dans le terminal T avec lequel le drone est en communication permanente à haut débit via la liaison Wi-Fi. Le traitement est adapté pour conserver la précision de la détection angulaire (par exemple ± 5°) et la précision de la distance déterminée à partir des coordonnées GPS du terminal et du drone (typiquement de 5 à 10 mètres avec les unités GPS grand public).

Dans des variantes de réalisation, les traitements précités peuvent être opérés au sein d'un serveur *cloud* distant auprès duquel est enregistré le drone. Ce dernier est alors pourvu, en plus du module de communication WiFi par lequel il échange des données avec le terminal T, d'un autre module de communication lui permettant de se connecter directement à un réseau de téléphonie mobile 3G ou 4G. Il est alors possible de déporter dans ce serveur *cloud* un certain nombre d'opérations et calculs de pilotage, de traitement d'image, etc. au lieu de les exécuter au sein d'un processeur embarqué dans le drone ou le terminal de télécommande.

Par ailleurs, la séquence d'images prise par la caméra C du drone D au cours de son parcours peut être soit stockée dans une mémoire embarquée dans le drone puis transférée vers le terminal ou un autre équipement intelligent à l'issue du vol, soit transmise en flux continu pendant la prise de vues elle-même et stockée dans le terminal T, soit encore transférée au serveur *cloud* dans l'hypothèse indiquée ci-dessus.

En tout état de cause, le traitement numérique est par ailleurs fondé sur un modèle de mouvement permettant de propager l'estimation de la localisation entre deux mesures consécutives.

La fusion de mesures de natures différentes (coordonnées cartésiennes pour les données GPS et coordonnées sphériques pour la détection angulaire), ayant chacune leurs imprécisions propres déterminées dans ces deux systèmes de coordonnées, est réalisée avantageusement avec un circuit de type filtre de Kalman étendu à coordonnées hybrides HC-EKF *(Hybrid Coordinate Extended Kalman Filter).*

De façon connue en soi, un filtre de Kalman met en œuvre un estimateur d'état, qui est un filtre à réponse impulsionnelle infinie estimant les états du système dynamique, ici la position géographique de la cible et sa vitesse, à partir d'une série de mesures appliquées en entrée. On trouvera les principes généraux de cette technique par exemple dans R.E. Kalman, A new Approach to Linear Filtering and Prediction Problems, Transactions of the ASME - Journal of Basic Engineering, Vol. 82 (1960).

Des détails d'un filtre de type HC-EKF, appliqué au guidage de munitions autonomes, sont donnés par K. Ezal et C. Agate, Tracking and interception of ground-based RF sources using autonomous guided munitions with passive bearings-only sensors and tracking algorithms, Toyon Research Corporation, 75 Aero Camino, Suite A, Goleta, CA, USA 93117.

Dans le cas présent, le filtre de Kalman reçoit en entrée :
- les coordonnées *x_{C}*, *y_{C}*, *z_{C}* données par l'unité GPS et la vitesse *vx_{C}*, *vy_{C}*, *vz_{C}* de la cible à un instant *t₀* puis à des instants successifs *t₁,* ..., dans un système de coordonnées cartésiennes (la vitesse étant estimée par l'écart entre deux positions successives mesurées par l'unité GPS du terminal T, divisé par le temps écoulé), et
- la position angulaire de la cible par rapport à l'axe principal du drone, donnée ici par analyse des images prises par la caméra C en localisant le motif visuel que constitue l'utilisateur dans chaque image prise, et représentée par une coordonnée angulaire *ah_{C}* dans le plan horizontal et une coordonnée angulaire *av_{C}* dans le plan vertical, avec une incertitude donnée inhérente à la façon dont ces coordonnées angulaires sont obtenues.

Le système dynamique du filtre de Kalman est constitué par un ensemble d'équations qui décrit le comportement de la cible. Une telle modélisation est décrite notamment dans le EP 2 431 084 A1, auquel on pourra se référer pour de plus amples détails.

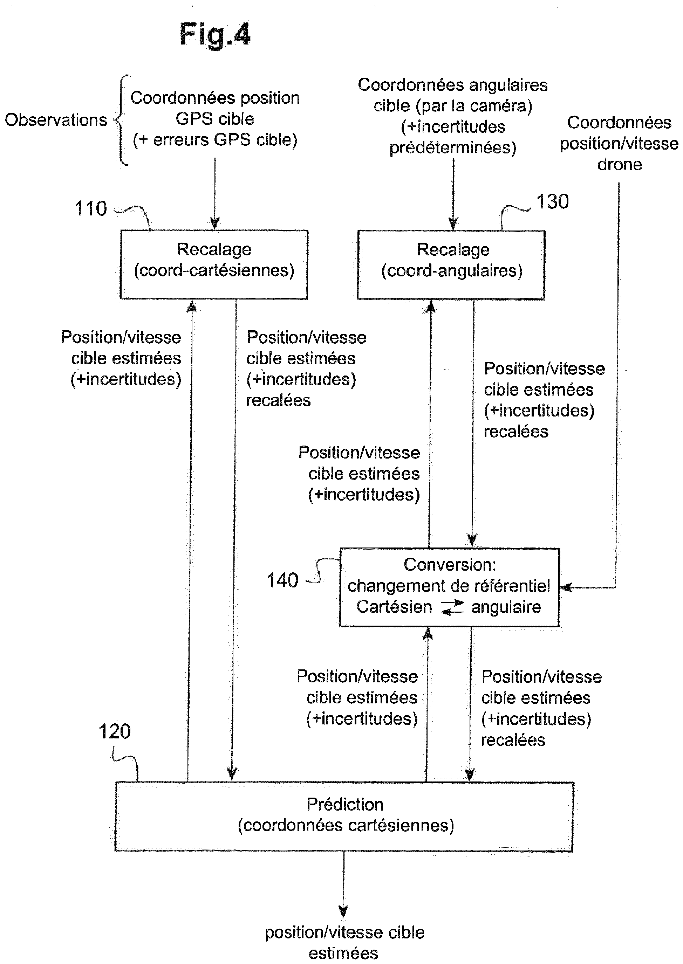

Le filtre de Kalman opère en deux phases (qui seront décrites plus en détail ci-après en référence à la Figure 4), avec successivement :
1°) une phase de prédiction, effectuée à chaque itération du filtre : cette phase consiste à prédire la position et la vitesse de la cible à l'aide :
   - d'une part des estimées (décorrélées) de la position et de la vitesse - et de leurs incertitudes associées -, recalées en fonction des propagations précédentes du filtre itératif, pour obtenir en sortie des données de position et de vitesse - ainsi que leurs incertitudes - utilisables pour anticiper les déplacements du drone, et
   - d'autre part d'un modèle prédictif de comportement dynamique de la cible.
   Dans le présent exemple, le modèle dynamique est un modèle où la vitesse de la cible est constante.
   Le modèle prédictif comprend également un modèle d'erreur permettant de faire évoluer les valeurs des incertitudes associées aux états estimés au cours de leur propagation ;
2°) une phase de recalage, qui consiste à corriger la prédiction ci-dessus en utilisant :
   - la mesure courante (en coordonnées sphériques) de la position angulaire de la cible par rapport à l'axe principal du drone. Cette étape est de préférence mise en œuvre à chaque fois qu'une nouvelle image est délivrée par la caméra C, donc ici à une cadence de 30 fois par seconde ; et
   - la mesure courante (en coordonnées cartésiennes) de la position de la cible donnée par le GPS de celle-ci. Ce recalage est opéré à chaque fois qu'une nouvelle position GPS est délivrée, typiquement à une cadence de 1 Hz.

Par ces phases de prédiction et de recalage, le filtre de Kalman utilise et estime :
- l'état de la position angulaire de la cible par rapport à l'axe principal du drone, de manière à recadrer l'image de la caméra de sorte que la cible soit centrée dans l'image et à positionner correctement le drone, ainsi que
- la distance entre la cible et le drone, de manière à générer des instructions de vol permettant au drone d'adapter sa trajectoire pour suivre la cible, ici en maintenant cette distance constante.

La Figure 4 représente sous forme de schéma par blocs les différents traitements mis en œuvre.

Sur cette figure, on a indiqué les diverses données d'entrée mesurées (observations), qui sont :
- les coordonnées (cartésiennes) de position de la cible produites par le GPS de la cible ;
- une indication des erreurs associées du GPS de la cible ;
- les coordonnées angulaires de la cible, produites à partir de l'image de la caméra du drone ;
- une incertitude prédéterminée correspondant à ces coordonnées angulaires ; et
- les coordonnées de position et la vitesse du drone, produites par le système de pilotage de celui-ci.

Les coordonnées de position produites par le GPS de la cible sont appliquées, avec les erreurs GPS associées, à un premier bloc de recalage 110, recalage qui est opéré en fonction de la position et de la vitesse estimées de la cible (ces informations et leurs incertitudes associées étant délivrées, comme on le verra plus bas, par le bloc 120 de prédiction du filtre de Kalman). Les valeurs de position et de vitesse recalées par le bloc 110 et leurs incertitudes associées (valeurs qui sont toutes en coordonnées cartésiennes) constituent des premiers paramètres d'entrée du bloc de prédiction 120 du filtre de Kalman.

Les coordonnées angulaires de la cible dérivées de l'analyse de l'image captée par la caméra, ainsi que les incertitudes prédéterminées associées de la mesure angulaire, sont appliquées à un second bloc de recalage 130, qui reçoit également en entrée les estimées de la position et de la vitesse de la cible avec leurs incertitudes associées, paramètres qui sont tous exprimés en coordonnées angulaires. Le bloc 130 délivre en sortie des données correspondantes recalées, exprimées également en coordonnées angulaires. Le recalage opéré par le bloc 130 est fonction des estimées de la position et de la vitesse de la cible, des incertitudes associées, des coordonnées de la cible, et d'une erreur prédéterminée de mesure d'angle.

Le traitement opéré au sein du bloc de prédiction 120 du filtre de Kalman produit en sortie :
- des estimées de la position et de la vitesse de la cible, sur la base, comme indiqué plus haut, d'un modèle dynamique de prédiction décrivant le comportement de la cible (par exemple un modèle où la vitesse de la cible est constante), comprenant également un modèle d'erreur associé permettant de faire évoluer l'incertitude de l'état estimé au cours de sa propagation lors des itérations successives du filtre de Kalman ; et
- des valeurs d'incertitude associées à ces estimées de position et de vitesse de la cible.

Comme décrit plus haut, ces sorties du bloc de prédiction (estimées et incertitudes associées) sont réintroduites dans les blocs de recalage 110 et 130, et ce bouclage permet notamment de maintenir la prédiction lorsque les données GPS et/ou les données de position angulaire de la cible sont provisoirement perdues pour une quelconque raison.

De plus, le fait de traiter non seulement les données proprement dites, mais aussi leurs incertitudes associées permet de rendre la mesure beaucoup plus précise et fiable.

Selon un aspect particulièrement avantageux de l'invention, un bloc 140 de conversion de coordonnées cartésiennes en coordonnées angulaires (et *vice versa*) est interposé entre le bloc 130 de recalage des paramètres déduits de l'analyse des images de la caméra, et le bloc 120 de prédiction du filtre de Kalman.

En effet, comme les mesures de position angulaires de la cible déduites de l'analyse des images de la caméra sont fortement non linéaires par rapport à l'état courant du filtre exprimé en coordonnées cartésiennes, elles ne peuvent pas être utilisées telles quelles pour un recalage selon le principe du filtre de Kalman.

De plus, il ne suffit pas de linéariser ces mesures non linéaires localement autour de l'état estimé courant (ce que l'on fait traditionnellement et qui constitue le principe du filtre de Kalman étendu), car cela ne garantit pas la convergence du filtre, et fournirait de mauvais résultats dans la présente application.

Le moteur de fusion opère donc une linéarisation des mesures en effectuant un changement du système de coordonnées, de coordonnées angulaires (sphériques) en coordonnées cartésiennes et *vice versa.*

Cette transformation, malgré le défaut d'exactitude pouvant en résulter, permet d'obtenir, entre l'état du filtre et la mesure angulaire donnée par les images de la caméra, une linéarité garantissant la stabilité du filtre du fait de l'homogénéité des différentes informations appliquées en entrée de celui-ci.

On notera que le bloc 140 de conversion reçoit également en entrée les informations de coordonnées de position et la vitesse du drone données par le circuit de pilotage de celui-ci. Ceci permet de connaitre à tout moment l'orientation du référentiel propre du drone, exprimé en coordonnées cartésiennes.

Dans la pratique, on itère les opérations décrites ci-dessus à la cadence des images prises par la caméra (typiquement 30 Hz), une nouvelle observation de position angulaire de la cible étant disponible à chacune de ces itérations. Une nouvelle observation des coordonnées GPS n'est en revanche disponible qu'à une cadence de 1 Hz, et est donc prise en compte par le bloc 110 une fois toutes les 30 itérations.

On notera ici que le traitement par le filtre de Kalman peut être optionnellement amélioré par la prise en compte d'informations supplémentaires et notamment par :
- une approximation de la vitesse de la cible, déterminée à partir de deux mesures GPS successives par l'unité GPS du terminal et de l'écart temporel qui les sépare ;
- une mesure de l'altitude de la cible, par exemple à l'aide d'un baromètre intégré au terminal T ;
- une mesure d'échelle ou de changement d'échelle dans les images prises par la caméra, pour le mode de réalisation où la position angulaire est déduite de ces images ;
- une mesure de l'accélération de la cible, obtenue par exemple à partir d'une centrale inertielle équipant le terminal T ; et/ou
- une mesure de distance entre le drone et la cible, par exemple à l'aide d'un capteur de temps de parcours basé sur des impulsions radio à ultra-large bande UWB (*Ultra Wide Band*) émises par le drone dans un champ dirigé vers l'avant de celui-ci avec une largeur de champ appropriée.

## Revendications

1. Système de prise de vues animées, comprenant un drone (D) pourvu d'une caméra (C) et une station au sol (T) communiquant par une liaison sans fil avec le drone,
les déplacements du drone étant définis par des instructions de vol appliquées à un groupe propulseur ou un ensemble de groupes propulseurs du drone, le drone étant apte à se déplacer de façon autonome pour réaliser une prise de vues animée d'une cible se déplaçant avec la station au sol (T),
le système comprenant :
- des moyens pour ajuster l'angle de visée de la caméra (C) au cours des déplacements du drone et de la cible pour que les images prises par la caméra soient cadrées sur la cible ;
- des moyens pour engendrer lesdites instructions de vol pour commander le déplacement du drone en direction de la cible et de sorte que la distance et la position angulaire entre le drone et la cible répondent à des règles déterminées,
lesdits moyens pour ajuster l'angle de visée et pour engendrer lesdites instructions de vol étant basés :
· sur une détermination de la position géographique GPS de la cible par rapport à la position géographique GPS du drone, et de la position angulaire de la cible par rapport à un axe principal lié au drone, et
· sur l'analyse d'un signal produit par analyse des images successivement délivrées par la caméra (C) du drone et/ou produit par la cible et reçu par le drone ;
- un moteur logiciel de fusion apte à obtenir, à partir d'informations de position de la cible comprenant également des valeurs associées d'incertitude de ladite position, des informations de position affinée de la cible ;
- une unité de prédiction (120) sensible à un modèle de prédiction du mouvement de la cible ; et
- une unité de recalage délivrant en sortie des valeurs recalées de position angulaire et de vitesse de la cible,
***caractérisé en ce que*** lesdites informations de position de la cible comprennent i) des informations de position géographique et ii) des informations non-géographiques de position angulaire par rapport à un axe principal lié au drone,
***en ce que*** le moteur logiciel de fusion comprend un filtre de Kalman étendu, EKF,
***en ce que*** le filtre EKF est un filtre EKF à coordonnées hybrides, HC-EKF, comprenant :
- ladite unité de prédiction (120) recevant en entrée :
i) des estimées recalées de la position et de la vitesse de la cible obtenues à partir desdites informations de position géographique, et
ii) des estimées recalées de la position et de la vitesse de la cible obtenues à partir desdites informations de position angulaire, ainsi que
iii) des incertitudes respectives desdites estimées ; et
- ladite unité de recalage (110 ; 130),
*et **en ce que*** ladite unité de recalage comprend :
- une première unité de recalage (110) recevant en entrée i) la position géographique de la cible et ii) des estimées de position et de vitesse de la cible issues de l'unité de prédiction (120), ainsi que iii) leurs incertitudes respectives, et délivrant en sortie, à l'unité de prédiction (120), lesdites estimées recalées de la position et de la vitesse de la cible obtenues à partir desdites informations de position géographique ; et
- une seconde unité de recalage (130) recevant en entrée i) la position angulaire de la cible et ii) des estimées de position angulaire et de vitesse de la cible issues de l'unité de prédiction (120), ainsi que iii) leurs incertitudes respectives, et délivrant en sortie, à l'unité de prédiction (120), lesdites estimées recalées de la position et de la vitesse de la cible obtenues à partir desdites informations de position angulaire.

2. Système selon la revendication 1, **caractérisé en ce que** le modèle de prédiction est un modèle à vitesse de cible constante.

3. Système selon la revendication 1, **caractérisé en ce que** la seconde unité de recalage (130,) opère en coordonnées angulaires et **en ce que** le système comprend en outre, entre la seconde unité de recalage (130) et l'unité de prédiction (120), une unité de conversion (140) apte à convertir les informations de position et de vitesse de la cible, générées en coordonnées cartésiennes, en informations correspondantes converties en coordonnées angulaires, et *vice versa.*

4. Système selon la revendication 1, **caractérisé en ce que** le moteur logiciel de fusion est apte à prendre en compte au moins une information supplémentaire parmi : une information d'altitude mesurée de la cible ; une information de l'accélération mesurée de la cible ; une information de distance mesurée entre le drone et la cible ; et une information supplémentaire d'échelle ou de changement d'échelle dans les images prises par la caméra.

5. Système selon la revendication 1, **caractérisée en ce que** la cadence d'analyse du signal produit par analyse des images successivement délivrées par la caméra du drone et/ou produit par la cible et reçu par le drone est plus rapide que la cadence à laquelle les positions géographiques GPS sont déterminées.

6. Système selon la revendication 1, **caractérisé en ce que** le signal produit par analyse des images successivement délivrées par la caméra du drone et/ou produit par la cible et reçu par le drone est un signal déduit de la présence visuelle de la cible dans l'image prise par la caméra (C) du drone (D), et **en ce qu'**il comprend des moyens pour localiser et suivre dans les images successives la localisation dudit signal.

7. Système selon la revendication 6, **caractérisé en ce que** la caméra est une caméra fixe à champ large de type *fish-eye* et **en ce que** les moyens d'ajustement de l'angle de visée de la caméra sont aptes à recadrer et retraiter les images à champ large prises par la caméra.

8. Système selon la revendication 6, **caractérisé en ce que** la caméra est une caméra montée sur un support articulé trois-axes de type *gimbal* avec suspension à la Cardan muni de servomoteurs pilotés par lesdits moyens d'ajustement de l'angle de visée de la caméra.

9. Système selon la revendication 1, **caractérisé en ce que** le signal produit par analyse des images successivement délivrées par la caméra du drone et/ou produit par la cible et reçu par le drone est un signal de type lidar réfléchi par la cible à partir d'une émission par le drone.

## Patentansprüche

1. System zur Aufnahme animierter Bilder, umfassend eine Drohne (D), die mit einer Kamera (C) versehen ist, und eine Bodenstation (T), die über eine drahtlose Verbindung mit der Drohne kommuniziert,
wobei die Bewegungen der Drohne durch Fluganweisungen definiert sind, die auf ein Antriebssystem oder eine Anordnung von Antriebssystemen der Drohne angewendet werden, wobei die Drohne in der Lage ist, sich selbständig zu bewegen, um eine Aufnahme animierter Bilder von einem Ziel zu realisieren, das sich mit der Bodenstation (T) bewegt, wobei dieses System umfasst:
- Mittel zum Verstellen des Bildwinkels der Kamera (C) im Laufe der Bewegungen der Drohne und des Ziels, damit die von der Kamera aufgenommenen Bilder auf das Ziel ausgerichtet sind;
- Mittel zum Erzeugen der Fluganweisungen, um die Bewegung der Drohne in Richtung des Ziels zu steuern, und in der Form, dass der Abstand und die Winkelposition zwischen der Drohne und dem Ziel bestimmten Regeln entsprechen,
wobei die Mittel zum Verstellen des Bildwinkels und zum Erzeugen der Fluganweisungen basieren:
- auf einer Bestimmung der geographischen GPS-Position des Ziels relativ zu der geographischen GPS-Position der Drohne und der Winkelposition des Ziels relativ zu einer mit der Drohne verbundenen Hauptachse und
- auf der Analyse eines Signals, das durch Analyse der Bilder, die nacheinander von der Kamera (C) der Drohne bereitgestellt werden, erzeugt wird und/oder von dem Ziel erzeugt und von der Drohne empfangen wird;
- eine Fusion-Software-Engine, die in der Lage ist, ausgehend von Informationen über die Position des Ziels, die auch zugehörige Unsicherheitswerte für die Position enthalten, präzisierte Positionsinformationen über das Ziel zu erhalten;
- eine Vorhersageeinheit (120), die gegenüber einem Modell zur Vorhersage der Bewegung des Ziels empfindlich ist; und
- eine Nachführungseinheit, die am Ausgang nachgeführte Werte für die Winkelposition und die Geschwindigkeit des Ziels bereitstellt,
***dadurch gekennzeichnet, dass*** die Informationen über die Position des Ziels i) Informationen über die geographische Position und ii) nicht-geographische Informationen über die Winkelposition relativ zu einer mit der Drohne verbundenen Hauptachse enthalten,
*dass* die Fusion-Software-Engine einen Erweiterten Kalman-Filter (EKF) umfasst,
*dass* der EKF-Filter ein EKF-Filter mit hybriden Koordinaten (HC-EKF) ist, umfassend:
- die Vorhersageeinheit (120), die am Eingang:
i) nachgeführte Schätzungen der Position und der Geschwindigkeit des Ziels, die ausgehend von den Informationen über die geographische Position erhalten werden, und
ii) nachgeführte Schätzungen der Position und der Geschwindigkeit des Ziels, die ausgehend von den Informationen über die Winkelposition erhalten werden, sowie
iii) jeweilige Unsicherheiten der Schätzungen empfängt; und
- die Nachführungseinheit (110; 130),
*und dass* die Nachführungseinheit umfasst:
- eine erste Nachführungseinheit (110), die am Eingang i) die geographische Position des Ziels und ii) Schätzungen der Position und der Geschwindigkeit des Ziels, die von der Vorhersageeinheit (120) stammen, sowie iii) deren jeweilige Unsicherheiten empfängt und am Ausgang, der Vorhersageeinheit (120), die nachgeführten Schätzungen der Position und der Geschwindigkeit des Ziels, die ausgehend von den Informationen über die geographische Position erhalten werden, bereitstellt; und
- eine zweite Nachführungseinheit (130), die am Eingang i) die Winkelposition des Ziels und ii) Schätzungen der Winkelposition und der Geschwindigkeit des Ziels, die von der Vorhersageeinheit (120) stammen, sowie iii) deren jeweilige Unsicherheiten empfängt und am Ausgang, der Vorhersageeinheit (120), die nachgeführten Schätzungen der Position und der Geschwindigkeit des Ziels, die ausgehend von den Informationen über die Winkelposition erhalten werden, bereitstellt.

2. System nach Anspruch 1, **dadurch gekennzeichnet, dass** das Modell zur Vorhersage ein Modell mit konstanter Zielgeschwindigkeit ist.

3. System nach Anspruch 1, **dadurch gekennzeichnet, dass** die zweite Nachführungseinheit (130) mit Winkelkoordinaten arbeitet, und dadurch, dass das System ferner, zwischen der zweiten Nachführungseinheit (130) und der Vorhersageeinheit (120), eine Umwandlungseinheit (140) umfasst, die in der Lage ist, die Informationen über die Position und die Geschwindigkeit des Ziel, die in kartesischen Koordinaten erzeugt sind, in entsprechende in Winkelkoordinaten umgewandelte Informationen umzuwandeln, und umgekehrt.

4. System nach Anspruch 1, **dadurch gekennzeichnet, dass** die Fusion-Software-Engine in der Lage ist, wenigstens eine zusätzliche Information zu berücksichtigen aus: einer Information über die gemessene Höhe des Ziels; einer Information über die gemessene Beschleunigung des Ziels; einer Information über den gemessenen Abstand zwischen der Drohne und dem Ziel; und einer zusätzlichen Information über den Maßstab oder die Maßstabsänderung in den von der Kamera aufgenommenen Bildern.

5. System nach Anspruch 1, **dadurch gekennzeichnet, dass** die Geschwindigkeit der Analyse des Signals, das durch Analyse der Bilder, die nacheinander von der Kamera der Drohne bereitgestellt werden, erzeugt wird und/oder von dem Ziel erzeugt und von der Drohne empfangen wird, schneller ist als diejenige, mit der die geographischen GPS-Positionen bestimmt werden.

6. System nach Anspruch 1, **dadurch gekennzeichnet, dass** das Signal, das durch Analyse der Bilder, die nacheinander von der Kamera der Drohne bereitgestellt werden, erzeugt wird und/oder von dem Ziel erzeugt und von der Drohne empfangen wird, ein Signal ist, das aus der visuellen Gegenwart des Ziels in dem Bild abgeleitet wird, das von der Kamera (C) der Drohne (D) aufgenommen wird, und dadurch, dass es Mittel umfasst, um in den aufeinander folgenden Bildern die Lokalisierung des Signals zu lokalisieren und zu verfolgen.

7. System nach Anspruch 6, **dadurch gekennzeichnet, dass** die Kamera eine Breitfeld-Fixkamera des Fisheye-Typs ist, und dadurch, dass die Mittel zum Anpassen des Bildfelds der Kamera in der Lage sind, die von der Kamera aufgenommenen Breitfeldbilder zuzuschneiden und zu verarbeiten.

8. System nach Anspruch 6, **dadurch gekennzeichnet, dass** die Kamera eine Kamera ist, die auf einer dreiachsigen Gelenkhalterung des Gimbal-Typs mit Cardan-Aufhängung und mit Servomotoren montiert ist, die von den Mitteln zum Anpassen des Bildfelds der Kamera angesteuert werden.

9. System nach Anspruch 1, **dadurch gekennzeichnet, dass** das Signal, das durch Analyse der Bilder, die nacheinander von der Kamera der Drohne bereitgestellt werden, erzeugt wird und/oder von dem Ziel erzeugt und von der Drohne empfangen wird, ein Signal des Lidar-Typs ist, das ausgehend von einer Aussendung durch die Drohne von dem Ziel reflektiert wird.

## Claims

1. A system for taking moving images, comprising a drone (D) provided with a camera (C) and a ground station (T) communicating with the drone through a wireless link,
the displacements of the drone being defined by flying instructions applied to a propulsion unit or a set of propulsion units of the drone, the drone being adapted to fly autonomously to take moving images of a target moving with the ground station (T),
the system comprising:
- means for adjusting the sight angle of the camera (C) during the displacements of the drone and of the target so that the images taken by the camera are centred to the target;
- means for generating said flying instructions to control the displacement of the drone towards the target and so that the distance and the angular position between the drone and the target fulfil determined rules,
said means for adjusting the sight angle and for generating said flying instructions being based:
• on a determination of the GPS geographical position of the target with respect to the GPS geographical position of the drone, and of the angular position of the target with respect to a main axis linked to the drone, and
• on the analysis of a signal produced by analysis of the images successively delivered by the camera (C) of the drone and/or produced by the target and received by the drone,
- a fusion software engine adapted to obtain refined target position information, from target position information also comprising associated values of uncertainty of said position;
- a prediction unit (120) sensitive to a model of prediction of the target movement; and
- an adjustment unit providing as an output adjusted values of the target angular position and speed,
***characterized in* that** said target position information comprises i) geographic position information and ii) non-geographic information of angular position with respect to a main axis linked to the drone,
***in* that** the fusion software engine comprises an Extended Kalman Filter, EKF,
***in* that** the EKF filter is a Hybrid Coordinate EKF filter, HC-EKF, comprising:
- said prediction unit (120) receiving as an input:
i) adjusted estimates of the target position and speed obtained from said geographic position information, and
ii) adjusted estimates of the target position and speed obtained from said angular position information, as well as
iii) respective uncertainties of said estimates; and
- said adjustment unit (110; 130),
*and* ***in* that** said adjustment unit comprises:
- a first adjustment unit (110) receiving as an input i) the target geographic position and ii) target position and speed estimates provided by the prediction unit (120), as well as iii) their respective uncertainties, and providing as an output, to the prediction unit (120), said adjusted estimates of the target position and speed obtained from said geographic position information; and
- a second adjustment unit (130) receiving as an input i) the target angular position and ii) target angular position and speed estimates provided by the prediction unit (120), as well as iii) their respective uncertainties, and providing as an output, to the prediction unit (120), said adjusted estimates of the target position and speed obtained from said angular position information.

2. The system according to claim 1, **characterized in that** the prediction model is a constant target speed model.

3. The system according to claim 1, **characterized in that** the second adjustment unit (130), operates in angular coordinates and **in that** the system further comprises, between the second adjustment unit (130) and the prediction unit (120), a conversion unit (140) adapted to convert the target position and speed information, generated in Cartesian coordinates, into corresponding information converted into angular coordinates, and vice versa.

4. The system according to claim 1, **characterized in that** the fusion software engine is adapted to take into account at least one additional piece of information among: information about the measured altitude of the target; information about the measured acceleration of the target; information about the measured distance between the drone and the target; and additional information about a scale or a scale change in the images taken by the camera.

5. The system according to claim 1, **characterized in that** the rate of analysis of the signal produced by analysis of the images successively provided by the camera of the drone, and/or produced by the target and received by the drone, is higher than the rate at which the GPS geographical positions are determined.

6. The system according to claim 1, **characterized in that** the signal produced by analysis of the images successively provided by the camera of the drone and/or produced by the target and received by the drone is a signal deduced from the visual presence of the target in the image taken by the camera (C) of the drone (D), and **in that** it comprises means for locating and tracking in the successive images the location of said signal.

7. The system according to claim 6, **characterized in that** the camera is a wide-angle fixed camera of the fisheye type and **in that** the means for adjusting the sight angle of the camera are adapted to frame and process the wide-angle images taken by the camera.

8. The system according to claim 6, **characterized in that** the camera is a camera mounted on a three-axis articulated support of the *gimbal* type with Cardan suspension, provided with servomotors piloted by said means for adjusting the sight angle of the camera.

9. The system according to claim 1, **characterized in that** the signal produced by analysis of the images successively provided by the camera of the drone and/or produced by the target and received by the drone is a signal of the lidar type reflected by the target from an emission by the drone.
